# EUROPEAN PATENT APPLICATION

(11) **EP 4 047 457 A1**
(43) Date of publication of application: **24.08.2022**
(21) Application number: 21182251.5
(22) Date of filing: 29.06.2021
(51) Int. Cl.: G06F 3/0346, G06F 1/16, G06F 3/038, H04M 1/724

(54) **METHOD AND DEVICE FOR ACQUIRING SENSOR DATA, TERMINAL, AND STORAGE MEDIUM**

(30) Priority: 23.02.2021 CN 202110203741
(71) Applicant: Beijing Xiaomi Mobile Software Co., Ltd., Beijing 100085 (CN)
(72) Inventor: YANG, Yankai, Beijing, 100085 (CN)
(74) Representative: Kudlek, Franz Thomas

(57) **Abstract**

The present invention relates to electronic technologies, and more particularly, to a method and device for acquiring sensor data, a terminal, and a storage medium. The terminal has multiple displays. Identification information of a display (41, 42, 51, 52, 53, 71, 73) including a display location where an application is being displayed is acquired. Sensor data corresponding to the display (41, 42, 51, 52, 53, 71, 73) including the display location is acquired according to the identification information.

## Description

### TECHNICAL FIELD

The present invention relates to electronic technologies, and more particularly, to a method and device for acquiring sensor data, a terminal, and a storage medium.

### BACKGROUND

Various sensing devices are generally provided in terminal equipment, for providing the terminal with various data, such as acceleration sensor data, direction data, light intensity data, etc., to facilitate performing various functions using applications.

### SUMMARY

The present invention provides a method and device for acquiring sensor data, and a storage medium.

According to a first aspect of the present invention, there is provided a method for acquiring sensor data. The method is applicable to a terminal having multiple displays. The method includes:
acquiring identification information of a display including a display location where an application is being displayed; and
acquiring, according to the identification information, sensor data corresponding to the display including the display location.

With a technical solution of embodiments of the present invention, when an application is displayed on different displays, different sensor data are acquired accordingly, so that sensor data acquired by an application depend on where the application is displayed, facilitating data processing by the application, improving accuracy in using sensor data, improving user experience.

Optionally, acquiring the identification information of the display including the display location where the application is being displayed includes:
monitoring a change in the display location of the application; and
in response to the change in the display location of the application, acquiring the identification information of the display including the display location where the application is being displayed.

Optionally, the method further includes:
establishing a display-sensor correspondence between a display and a sensor of the terminal.

Optionally, acquiring, according to the identification information, the sensor data corresponding to the display including the display location includes:
determining, according to the display-sensor correspondence, a sensor corresponding to the display indicated by the identification information;
registering the sensor; and
acquiring the sensor data generated by the sensor that has been registered.

Optionally, the method further includes:
determining posture information of the terminal based on the sensor data.

Optionally, the method further includes:
determining, based on the sensor data, at least one of a display orientation or a display brightness for displaying the application at the display location.

According to a second aspect of the present invention, there is provided a device for acquiring sensor data. The device is applicable to a terminal having multiple displays. The device includes a first acquiring module and a second acquiring module.

The first acquiring module is configured to acquire identification information of a display including a display location where an application is being displayed.

The second acquiring module is configured to acquire, according to the identification information, sensor data corresponding to the display including the display location.

The advantages and technical effects of the device of embodiments of the present invention correspond to those of the method presented above.

Optionally, the first acquiring module includes a monitoring sub-module and a first acquiring sub-module.

The monitoring sub-module may be configured to monitor a change in the display location of the application.

The first acquiring sub-module may be configured to, in response to the change in the display location of the application, acquire the identification information of the display including the display location where the application is being displayed.

Optionally, the device further includes an establishing module.

The establishing module may be configured to establish a display-sensor correspondence between a display and a sensor of the terminal.

Optionally, the second acquiring module includes a determining sub-module, a registering sub-module, and a second acquiring sub-module.

The determining sub-module may be configured to determine a sensor corresponding to the display indicated by the identification information according to the display-sensor correspondence.

The registering sub-module may be configured to register the sensor.

The second acquiring sub-module may be configured to acquire the sensor data generated by the sensor that has been registered.

Optionally, the device further includes a first determining module.

The first determining module may be configured to determine posture information of the terminal based on the sensor data.

Optionally, the device further includes a second determining module.

The second determining module may be configured to determine, based on the sensor data, at least one of a display orientation or a display brightness for displaying the application at the display location.

According to a third aspect of the present invention, there is provided a terminal, including at least a processor and a memory configured to store processor executable instructions.

The processor is configured to implement steps of any aforementioned method for acquiring sensor data when executing the executable instructions.

The advantages and technical effects of the terminal of embodiments of the present invention correspond to those of the method presented above.

According to a fourth aspect of the present invention, there is provided a computer-readable storage medium or recording medium having stored therein computer-executable instructions which, when executed by a processor, implement steps of any aforementioned method for acquiring sensor data when executing the executable instructions.

The advantages and technical effects of the storage medium or recording medium of embodiments of the present invention correspond to those of the method presented above.

In one particular embodiment, the method is determined by computer program instructions.

Consequently, according to an aspect herein, the subject invention is further directed to a computer program including instructions for executing the method according to embodiments of the present invention, when the program is executed by a computer.

This program can use any programming language and take the form of source code, object code or a code intermediate between source code and object code, such as a partially compiled form, or any other desirable form.

It should be understood that the general description above and the detailed description below are illustrative and explanatory, and do not limit the present invention.

### BRIEF DESCRIPTION OF THE DRAWINGS

The accompanying drawings, which are incorporated in and form a part of this specification, illustrate embodiments consistent with the present invention and, together with the description, serve to explain the principles of the present invention.
FIG. 1 is a flowchart of a method for acquiring sensor data according to an illustrative embodiment.
FIG. 2 is an illustrative diagram of a structure of a mobile terminal according to an illustrative embodiment.
FIG. 3 is a flowchart of a method for acquiring sensor data according to an illustrative embodiment.
FIG. 4 is an illustrative diagram of a folding screen of a mobile terminal according to an illustrative embodiment.
FIG. 5 is an illustrative diagram of a structure of a mobile terminal according to an illustrative embodiment.
FIG. 6 is an illustrative diagram of a principle of acquiring sensor data by an application according to an illustrative embodiment.
FIG. 7 is an illustrative diagram of a structure of a mobile terminal having multiple sensors according to an illustrative embodiment.
FIG. 8 is an illustrative diagram of registering a sensor for an application according to an illustrative embodiment.
FIG. 9 is a diagram of a principle of acquiring sensor data by an application according to an illustrative embodiment.
FIG. 10 is a block diagram of a structure of a device for acquiring sensor data according to an illustrative embodiment.
FIG. 11 is a block diagram of a physical structure of a terminal according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of devices and methods consistent with aspects related to the present invention as recited in the appended claims. The illustrative implementation modes may take on multiple forms, and should not be taken as being limited to examples illustrated herein. Instead, by providing such implementation modes, embodiments herein may become more comprehensive and complete, and comprehensive concept of the illustrative implementation modes may be delivered to those skilled in the art. Implementations set forth in the following illustrative embodiments do not represent all implementations in accordance with the present invention. Rather, they are merely examples of the apparatus and method in accordance with certain aspects herein as recited in the accompanying claims.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

A terminal may sometimes be referred to as a smart terminal. The terminal may be a mobile terminal. The terminal may also be referred to as User Equipment (UE), a Mobile Station (MS), etc. A terminal may be equipment or a chip provided in the equipment that provides a user with a voice and / or data connection, such as handheld equipment, onboard equipment, etc., with a wireless connection function. Examples of a terminal may include a mobile phone, a tablet computer, a notebook computer, a palm computer, a Mobile Internet Device (MID), wearable equipment, Virtual Reality (VR) equipment, Augmented Reality (AR) equipment, a wireless terminal in industrial control, a wireless terminal in unmanned drive, a wireless terminal in remote surgery, a wireless terminal in a smart grid, a wireless terminal in transportation safety, a wireless terminal in smart city, a wireless terminal in smart home, etc.

Various sensing devices are generally provided in terminal equipment, for providing the terminal with various data, such as acceleration sensor data, direction data, light intensity data, etc., to facilitate performing various functions using applications. However, in related art, there are an increasing number of terminals each having multiple displays, and there tends to be an error in using sensor data by an application on different displays.

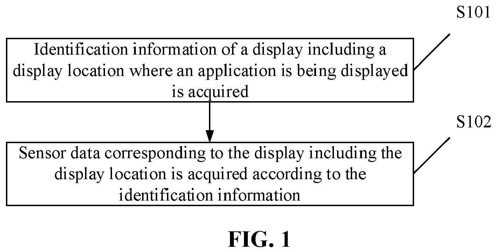

FIG. 1 is a flowchart of a method for acquiring sensor data according to an illustrative embodiment. As shown in FIG. 1, the method may be applied to a terminal having multiple displays. The method includes steps as follows.

In S101, identification information of a display including a display location where an application is being displayed is acquired.

In S102, sensor data corresponding to the display including the display location is acquired according to the identification information.

In embodiments of the present invention, the terminal may be various kinds of mobile smart electronic equipment having multiple displays, such as a mobile phone, a tablet computer, a notebook computer, wearable electronic equipment such as smart glasses, etc. The multiple displays of the terminal may be displays separated from each other, and may be located on different surfaces of the terminal. The multiple displays of the terminal may further include multiple display areas formed by a bendable or foldable flexible display, such as a folding screen or a flexible display of a mobile phone. When a folding screen is in an unfolded state, two display areas of the folding screen are located in the same plane. When the folding screen is in a folded state, the two display areas of the folding screen are located in different planes. In this case, the folding screen may be used as one display displaying a picture, or as two displays respectively displaying different pictures.

Here, identification information of a display may be information such as a number, a name, etc., of the display, or may be information on a display-dependent interface, etc. The identification information of different displays may correspond to different sensors, and therefore different sensor data may be acquired corresponding to different displays.

An application may be displayed at different locations of the multiple displays of the terminal. For example, an application may be displayed on different displays or on different display areas of a display. Different displays may be located at locations with different sensors. For example, photosensitive sensors may be provided respectively at the front and the back of a terminal. Different gravity sensors, acceleration sensors, etc., may be provided at different parts of a foldable terminal. Data provided by such sensors may be used for adjusting a picture displayed, such as adjusting a picture brightness, a picture orientation, etc., and may also be used for a human-computer interaction function in an application, such as optical recognition, motion detection, etc.

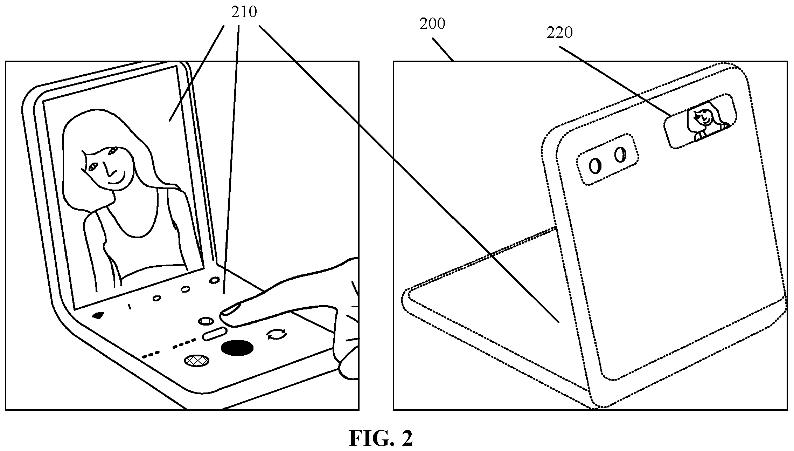

In embodiments of the present invention, a terminal may monitor the display location of an application, i.e., a location where an application is displayed, in real time through an application interface, etc. For a terminal having multiple screens, the display location of an application may be switched in real time by detecting an operation of a user or the posture of the terminal. The mobile terminal shown in FIG. 2 is a mobile phone 200 having a folding screen. When a mobile phone having a folding screen is in a folded state, an application is displayed on a secondary display 220 on the back of the folding screen 210. In this case, if it is detected that the display location of the application is the secondary display, a sensor corresponding to the secondary display may be determined. If a mobile phone having a folding screen is switched to an unfolded state, it may be switched to display the application on the upper half of the folding screen. In this case, a sensor corresponding to the upper half of the folding screen may be determined. If the upper half of the folding screen and the secondary display are located on one part that is relatively fixed, such as when the secondary display is located at the back of the upper half, the upper half of the folding screen and the secondary display may correspond to one sensor or one set of sensors.

If the folding screen detects a touch slide operation, a display window displaying the application may be dragged from the upper half to a lower half of the folding screen. In this case, the terminal may detect that the application is being displayed on the lower half, and then a sensor corresponding to a location of the terminal where the lower half is located may be determined.

It should be noted that multiple displays of a terminal may also display multiple different applications. The terminal detects the display location of an application, and determines a sensor at a location corresponding to the application. In this case, different sensor data may be provided to the applications, for use by the different applications.

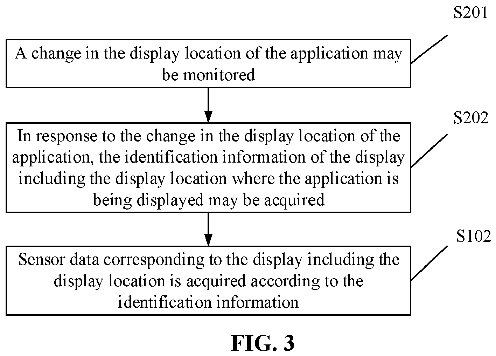

In this way, a terminal may acquire sensor data corresponding to a display on which an application is located according to the display location of the application, so that the application uses matching sensor data regardless of the display on which the application is displayed. In this way, compared to using just one set of sensor data, the interaction effect and the display effect in relation to the application are improved effectively reducing inaccuracy in sensor data, improving user experience. In some embodiments, as shown in FIG. 3, the identification information of the display including the display location where the application is being displayed may be acquired as follows.

In S201, a change in the display location of the application may be monitored.

In S202, in response to the change in the display location of the application, the identification information of the display including the display location where the application is being displayed may be acquired.

Since the terminal has multiple displays, the application may switch the display location at any time according to an operation instruction of a user or the posture of the terminal, such as the folded state, the unfolded state, etc. Therefore, the terminal may detect the display location of the application in real time during the display of the application, and acquire corresponding sensor data, and may also monitor a change in the display location of the application. If there is no change in the display location of the application, it is not necessary to detect a sensor corresponding to a display in real time, and data detection may be performed using the sensor after a last switch. If a change in the display location of the application is detected, such as when there is a change in the posture of the terminal, or a user moves the application by an operation such as a slide, the display on which the application is located may be detected, and it may be switched to a corresponding sensor for collecting sensor data.

In one embodiment, sensor replacement may be triggered by monitoring a change in the display location of the application, upon moving to a display, i.e., switching the source of the sensor data, reducing any unnecessary switch due to repeated changes in the display location of the application.

In some embodiments, the method further includes a step as follows.

A display-sensor correspondence between a display and a sensor of the terminal may be established.

In embodiments of the present invention, a correspondence between a display and a sensor may be established. For example, a display may be associated with one or more sensors.

It should be noted that a display may correspond to one sensor or a group of sensors. In addition, different displays may share one sensor. That is, the correspondence may be a one-to-one correspondence, or may be a one-to-many or a many-to-one correspondence.

The correspondence may associate identification information of a display with identification information of a sensor. For example, the identification information may be the numbers, the names, interface information, or addresses, etc., of a display and a sensor.

In some embodiments, the sensor data corresponding to the display including the display location may be acquired according to the identification information, as follows.

A sensor corresponding to the display indicated by the identification information may be determined according to the display-sensor correspondence.

The sensor may be registered.

The sensor data generated by the sensor that has been registered may be acquired.

In embodiments of the present invention, since there is a display-sensor correspondence, a sensor is determined corresponding to a display indicated by the identification information. In acquiring sensor data, the sensor may first be registered, acquiring the sensor data through registration authorization.

The application may acquire the sensor data generated by the registered sensor according to the registration information.

In some embodiments, the method further includes a step as follows.

Posture information of the terminal may be determined based on the sensor data.

Different types of sensor data may be applied to different functions of the application, or used for adjusting a picture of displaying the application accordingly, etc.

In embodiments of the present invention, posture information of the terminal may be determined through the sensor data. For example, a terminal may have parts that may move with respect to each other. There may be different gesture information if the screens may move with respect to each other. The parts movable with respect to each other may each have an orientation sensor, i.e., sensors having various functions such as for sensing a gravity, an acceleration, an angular acceleration, a location, etc., such as a gyroscope, an acceleration sensor, a gravity sensor, a GPS sensor, etc. With these orientation sensors, multiple displays may each have different orientation information, determining information on the posture of the terminal. For example, with a mobile phone having a folding or flip function, with a folding angle of 90 degrees between the mobile phone body and the flip, the display on top of the flip is vertical, and the display on top of the mobile phone body is horizontal. In this case, data detected by an orientation sensor located in the mobile phone body differ from data detected by an orientation sensor located in the flip of the mobile phone, so that orientation information acquired by a corresponding display differs.

The posture information of the terminal may be used in an application having a somatosensory function, a positioning function, etc., to facilitate data processing and human-computer interaction.

In some embodiments, the method further includes a step as follows.

At least one of a display orientation or a display brightness for displaying the application at the display location may be determined based on the sensor data.

The sensor data may also be used to adjust various parameters related to displaying an application. For example, a light sensor may detect ambient light brightness at the location where the display is located. Therefore, the display brightness of displaying the application on a display may be adjusted according to brightness data detected by a light sensor corresponding to the display.

The gyroscope, the acceleration sensor, etc., may be used to detect the orientation of a display. Therefore, an application may be displayed at a display location in a display orientation according to the orientation of a display detected by such a sensor.

In this way, a parameter such as the display orientation and the display brightness for displaying an application may be adjusted after switching the display location of the application among multiple displays, reducing the occurrence of being too bright, too dark, or an abnormal display orientation after switching the display location.

Embodiments of the present invention also provide examples as follows.

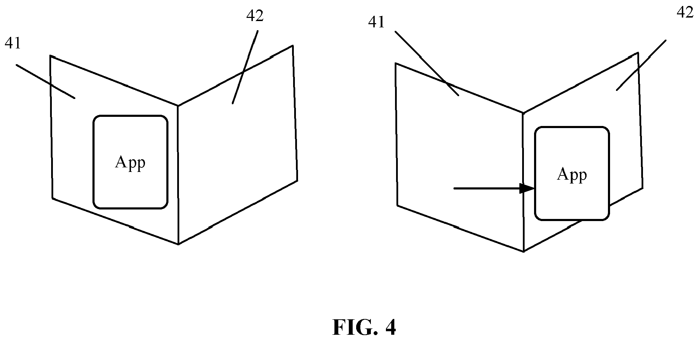

In embodiments of the present invention, the terminal may be mobile electronic equipment having a folding screen. As shown in FIG. 4, two parts of the folding screen of the mobile terminal movable with respect to each other may be a display 41 and a display 42, respectively, and an application (APP) may be displayed on either display.

If the terminal has just one orientation sensor and the detected orientation data are the same for both displays, then the orientation information acquired by applications displayed on different screens of the terminal is identical. However, due to the difference in orientations of the displays, the orientation information acquired by the applications located on different displays does not match the actual orientation of the displays, which may result in an abnormal or deviated displayed picture, reducing user experience.

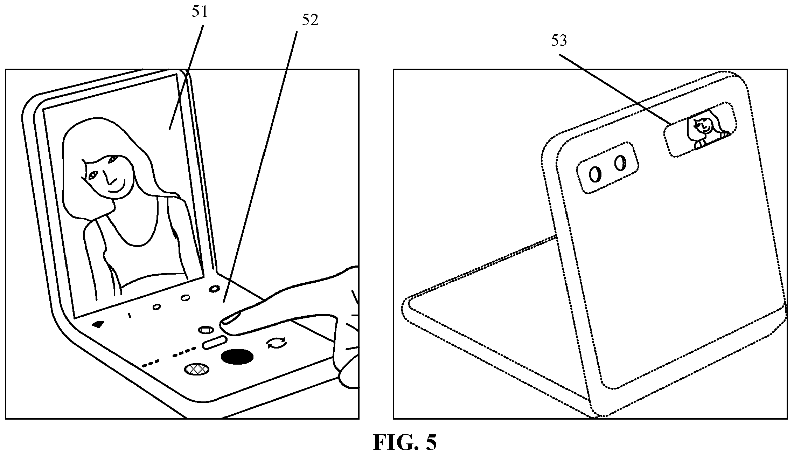

Thus, in embodiments of the present invention, as shown in FIG. 5, the application may be displayed on displays at three different locations of the terminal. The display 51 and the display 52 are two display areas of the folding screen foldable with respect to each other, and may respectively display pictures of displaying different applications, or cooperate to display a complete displayed picture. The display 53 is a secondary display located on the back of the terminal, and the application may also be displayed on the secondary display.

In embodiments of the present invention, when the terminal is placed on a desktop, orientation information in a vertical direction may be acquired for an application displayed on the display 51 or the display 53. Orientation information in a horizontal direction may be acquired for an application displayed on the display 52.

In this way, information on the actual physical orientation of different displays displaying the application may be acquired, facilitating adjustment of display of the application to an appropriate displayed picture.

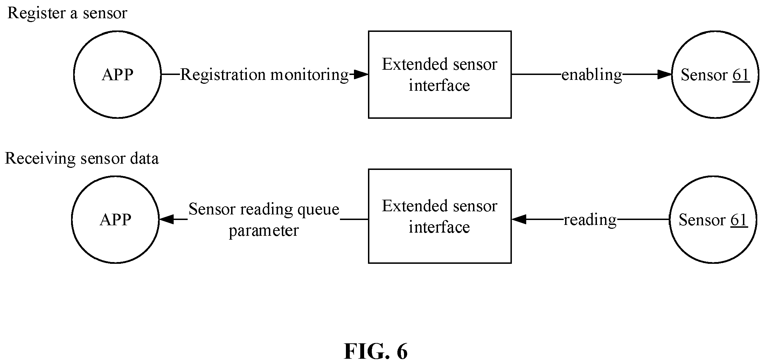

In one embodiment, acquiring detection logic of an orientation sensor by an application may be as shown in FIG. 6:

The APP registers the sensor 61 by monitoring a sensor servinge unit.

The data of the sensor 61 may be read when the application is in use.

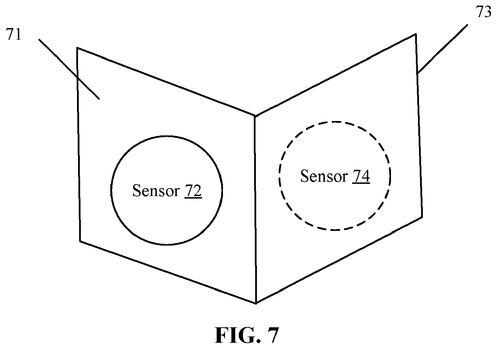

In embodiments of the present invention, for a terminal having a folding screen, as shown in FIG. 7, a sensor 72 is provided at a location where the display 71 is located, and a sensor 74 is provided at a location where the display 73 is located. In addition, other displays may be provided on other surfaces of the terminal, and the display location of the application may be switched between the display 71 and the display 73 as well as other displays.

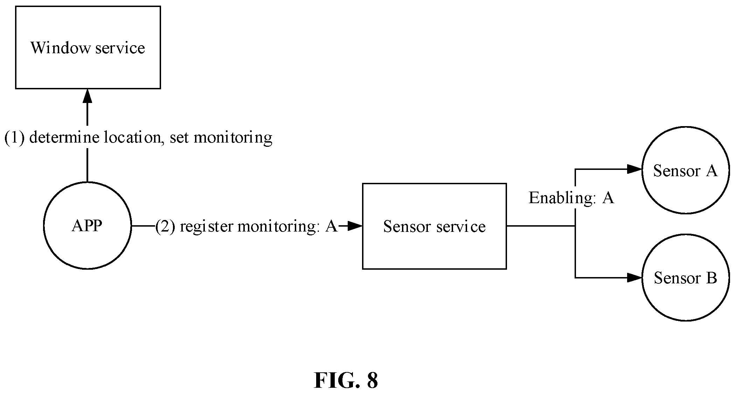

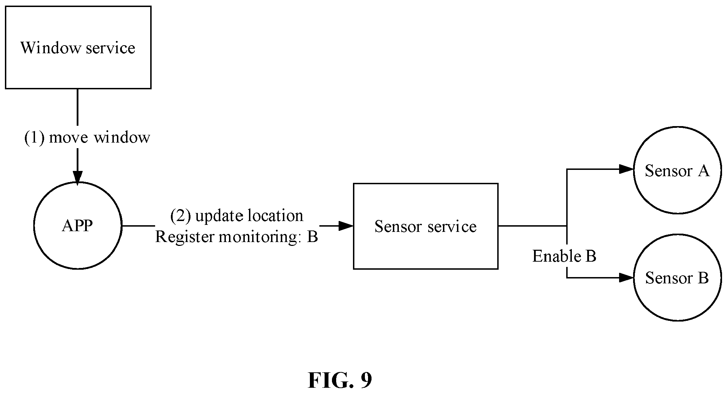

In embodiments of the present invention, as shown in FIG. 8, the terminal first registers a sensor corresponding to the display location of the application, and sets to monitor a change in the location of a window. In this case, the sensor A corresponding to the current display location of the application is registered, and the application may acquire the data detected by the sensor A. When a window movement is monitored, as shown in FIG. 9, if the window of the application moves to the location of the display B, the change monitored by the window service may update the sensor from the sensor A to the sensor B, to start to receive the data reported by the sensor B.

According to the technical solution of embodiments of the present invention, when the application is at different locations of the folding screen, sensors of the same type located at different locations may be allocated to the application according to specific requirements of the application.

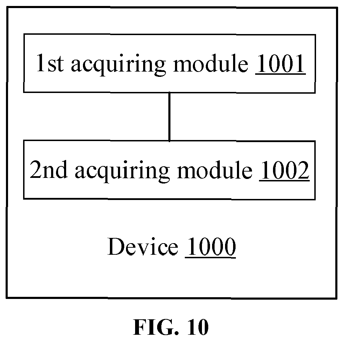

FIG. 10 is a block diagram of a structure of a device for acquiring sensor data according to an illustrative embodiment. As shown in FIG. 10, the device 1000 is applied to a terminal having multiple displays. The device includes a first acquiring module and a second acquiring module.

The first acquiring module 1001 is configured to acquire identification information of a display including a display location where an application is being displayed,

The second acquiring module 1002 is configured to acquire, according to the identification information, sensor data corresponding to the display including the display location.

In some embodiments, the first acquiring module includes a monitoring sub-module and a first acquiring sub-module.

The monitoring sub-module may be configured to monitor a change in the display location of the application.

The first acquiring sub-module may be configured to, in response to the change in the display location of the application, acquire the identification information of the display including the display location where the application is being displayed.

In some embodiments, the device further includes an establishing module.

The establishing module may be configured to establish a display-sensor correspondence between a display and a sensor of the terminal..

In some embodiments, the second acquiring module includes a determining sub-module, a registering sub-module, and a second acquiring sub-module.

The determining sub-module may be configured to determine a sensor corresponding to the display indicated by the identification information according to the display-sensor correspondence.

The registering sub-module may be configured to register the sensor.

The second acquiring sub-module may be configured to acquire the sensor data generated by the sensor that has been registered.

In some embodiments, the device further includes a first determining module.

The first determining module may be configured to determine posture information of the terminal based on the sensor data.

In some embodiments, the device of claim further includes a second determining module.

The second determining module may be configured to determine, based on the sensor data, at least one of a display orientation or a display brightness for displaying the application at the display location.

A module of a device according to an aforementioned embodiment may perform an operation in a mode elaborated in an embodiment of a method herein, which will not be repeated here.

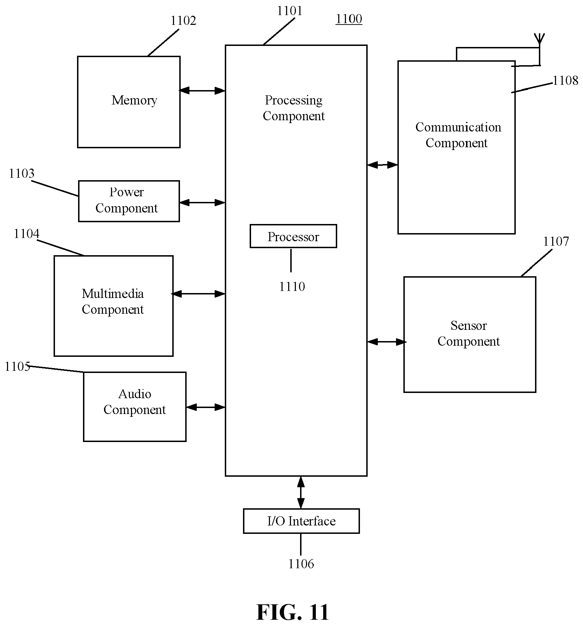

FIG. 11 is a block diagram of a terminal 1100 according to an illustrative embodiment. For example, the terminal 1100 may be a mobile phone, a computer, a digital broadcasting terminal, a message transceiver, a game console, tablet equipment, medical equipment, fitness equipment, a Personal Digital Assistant (PDA), etc.

Referring to FIG. 11, the terminal 1100 may include one or more components as follows: a processing component 1101, a memory 1102, a power component 1103, a multimedia component 1104, an audio component 1105, an Input / Output (I/O) interface 1106, a sensor component 1107, and a communication component 1108.

The processing component 1101 generally controls an overall operation of the display equipment, such as operations associated with display, a telephone call, data communication, a camera operation, a recording operation, etc. The processing component 1101 may include one or more processors 1110 to execute instructions so as to complete all or some steps of the method. In addition, the processing component 1101 may include one or more modules to facilitate interaction between the processing component 1101 and other components. For example, the processing component 1101 may include a multimedia module to facilitate interaction between the multimedia component 1104 and the processing component 1101.

The memory 1102 is configured to store various types of data to support operation on the terminal 1100. Examples of these data include instructions of any application or method configured to operate on the terminal 1100, contact data, phonebook data, messages, images, videos, and /etc. The memory 1102 may be realized by any type of volatile or non-volatile storage equipment or combination of the volatile or non-volatile storage equipment, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power component 1103 supplies electric power to various components of the terminal 1100. The power component 1103 may include a power management system, one or more power supplies, and other components related to generating, managing and distributing electric power for the terminal 1100.

The multimedia component 1104 includes a screen providing an output interface between the terminal 1100 and a user. The screen may include a Liquid Crystal Display (LCD) and a Touch Panel (TP). If the screen includes a TP, the screen may be realized as a touch screen to receive an input signal from a user. The TP includes one or more touch sensors for sensing touch, slide and gestures on the TP. The touch sensors not only may sense the boundary of a touch or slide move, but also detect the duration and pressure related to the touch or slide move. In some embodiments, the multimedia component 1104 includes a front camera and /or a rear camera. When the terminal 1100 is in an operation mode such as a shooting mode or a video mode, the front camera and /or the rear camera may receive external multimedia data. Each of the front camera and /or the rear camera may be a fixed optical lens system or may have a focal length and be capable of optical zooming.

The audio component 1105 is configured to output and /or input an audio signal. For example, the audio component 1105 includes a microphone (MIC). When the terminal 1100 is in an operation mode such as a call mode, a recording mode, and a voice recognition mode, the MIC is configured to receive an external audio signal. The received audio signal may be further stored in the memory 1102 or may be sent via the communication component 1108. In some embodiments, the audio component 1105 further includes a loudspeaker configured to output the audio signal.

The I/O interface 1106 provides an interface between the processing component 1101 and a peripheral interface module. The peripheral interface module may be a keypad, a click wheel, a button, etc. These buttons may include but are not limited to: a homepage button, a volume button, a start button, and a lock button.

The sensor component 1107 includes one or more sensors for assessing various states of the terminal 1100. For example, the sensor component 1107 may detect an on/off state of the terminal 1100 and relative location of components such as the display and the keypad of the terminal 1100. The sensor component 1107 may further detect a change in the location of the terminal 1100 or of a component of the terminal 1100, whether there is contact between the terminal 1100 and a user, the orientation or acceleration/deceleration of the terminal 1100, and a change in the temperature of the terminal 1100. The sensor component 1107 may include a proximity sensor configured to detect existence of a nearby object without physical contact. The sensor component 1107 may further include an optical sensor such as a Complementary Metal-Oxide-Semiconductor (CMOS) or Charge-Coupled-Device (CCD) image sensor used in an imaging application. In some embodiments, the sensor component 1107 may further include an acceleration sensor, a gyroscope sensor, a magnetic sensor, a pressure sensor, or a temperature sensor.

The communication component 1108 is configured to facilitate wired or wireless/radio communication between the terminal 1100 and other equipment. The a terminal 1100 may access a radio network based on a communication standard such as WiFi, 2G, 3G, .., or a combination of the any communication standard. In an illustrative embodiment, the communication component 1108 broadcasts related information or receives a broadcast signal from an external broadcast management system via a broadcast channel. In an illustrative embodiment, the communication component 1108 further includes a Near Field Communication (NFC) module for short-range communication. For example, the NFC module may be realized based on Radio Frequency Identification (RFID), Infrared Data Association (IrDA), Ultra-WideBand (UWB) technology, BlueTooth (BT) technology, and other technologies.

In an illustrative embodiment, the terminal 1100 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components, to implement the method.

In an illustrative embodiment, a computer-readable storage medium including instructions, such as the memory 1102 including instructions, is further provided. The instructions may be executed by the processor 1110 of the terminal 1100 to implement an aforementioned method. For example, the computer-readable storage medium may be a Read-Only Memory (ROM), a Random Access Memory (RAM), a Compact Disc Read-Only Memory (CD-ROM), a magnetic tape, a floppy disk, optical data storage equipment, etc.

Embodiments of the present invention further provide a computer-readable storage medium. When instructions in the storage medium are executed by a processor of a mobile terminal, the mobile terminal is allowed to perform a method provided in any embodiment herein.

Further note that although in drawings herein operations are described in a specific or der, it should not be construed as that the operations have to be performed in the specific or der or sequence, or that any operation shown has to be performed in or der to acquire an expected result. Under a specific circumstance, multitask and parallel processing may be advantageous.

Other implementations of the present invention will be apparent to a person having ordinary skill in the art that has deemed the specification and practiced the present invention. The present invention is intended to cover any variation, use, or adaptation of the present invention following the general principles of the present invention and including such departures from the present invention as come within common knowledge or customary practice in the art. The specification and the embodiments are intended to be illustrative, with the scope of the present invention being indicated by the appended claims.

It should be understood that the present invention is not limited to the exact construction that has been described above and illustrated in the accompanying drawings, and that various modifications and changes may be made to the present invention without departing from the scope of the present invention. It is intended that the scope of the present invention is limited by the appended claims.

## Claims

1. A method for acquiring sensor data, applied to a terminal (1100) having multiple displays (41, 42, 51, 52, 53, 71, 73), **characterized in that** the method comprises:
acquiring (S101) identification information of a display (41, 42, 51, 52, 53, 71, 73) comprising a display location where an application is being displayed; and
acquiring (SI02), according to the identification information, sensor data corresponding to the display (41, 42, 51, 52, 53, 71, 73) comprising the display location.

2. The method of claim 1, wherein acquiring the identification information of the display (41, 42, 51, 52, 53, 71, 73) comprising the display location where the application is being displayed comprises:
monitoring (S201) a change in the display location of the application; and
in response to the change in the display location of the application, acquiring (S202) the identification information of the display (41, 42, 51, 52, 53, 71, 73) comprising the display location where the application is being displayed.

3. The method of claim 1 or 2, further comprising:
establishing a display-sensor correspondence between a display (41, 42, 51, 52, 53, 71, 73) and a sensor (72, 74; A, B) of the terminal (1100).

4. The method of any one of claims 1 to 3, wherein acquiring, according to the identification information, the sensor data corresponding to the display (41, 42, 51, 52, 53, 71, 73) comprising the display location comprises:
determining, according to the display-sensor correspondence, a sensor (72, 74; A, B) corresponding to the display (41, 42, 51, 52, 53, 71, 73) indicated by the identification information;
registering the sensor (72, 74; A, B); and
acquiring the sensor data generated by the sensor (72, 74; A, B) that has been registered.

5. The method of any one of claims 1 to 4, further comprising:
determining posture information of the terminal (1100) based on the sensor data.

6. The method of any one of claims 1 to 5, further comprising:
determining, based on the sensor data, at least one of a display orientation or a display brightness for displaying the application at the display location.

7. A device (1000) for acquiring sensor data, applied to a terminal (1100) having multiple displays (41, 42, 51, 52, 53, 71, 73), **characterized in that** the device comprises a first acquiring module (1001) and a second acquiring module (1002),
wherein the first acquiring module (1001) is configured to acquire identification information of a display (41, 42, 51, 52, 53, 71, 73) comprising a display location where an application is being displayed,
wherein the second acquiring module (1002) is configured to acquire, according to the identification information, sensor data corresponding to the display (41, 42, 51, 52, 53, 71, 73) comprising the display location.

8. The device of claim 7, wherein the first acquiring module (1001) comprises a monitoring sub-module and a first acquiring sub-module,
wherein the monitoring sub-module is configured to monitor a change in the display location of the application,
wherein the first acquiring sub-module is configured to, in response to the change in the display location of the application, acquire the identification information of the display (41, 42, 51, 52, 53, 71, 73) comprising the display location where the application is being displayed.

9. The device of claim 7 or 8, further comprising an establishing module,
wherein the establishing module is configured to establish a display-sensor correspondence between a display (41, 42, 51, 52, 53, 71, 73) and a sensor (72, 74; A, B) of the terminal (1100).

10. The device of any one of claims 7 to 9, wherein the second acquiring module (1002) comprises a determining sub-module, a registering sub-module, and a second acquiring sub-module,
wherein the determining sub-module is configured to determine a sensor (72, 74; A, B) corresponding to the display (41, 42, 51, 52, 53, 71, 73) indicated by the identification information according to the display-sensor correspondence,
wherein the registering sub-module is configured to register the sensor (72, 74; A, B),
wherein the second acquiring sub-module is configured to acquire the sensor data generated by the sensor (72, 74; A, B) that has been registered.

11. The device of any one of claims 7 to 10, further comprising a first determining module,
wherein the first determining module is configured to determine posture information of the terminal (1100) based on the sensor data.

12. The device of any one of claims 7 to 11, further comprising a second determining module,
wherein the second determining module is configured to determine, based on the sensor data, at least one of a display orientation or a display brightness for displaying the application at the display location.

13. A terminal (1100), comprising at least a processor (1110) and a memory (1102) configured to store processor executable instructions,
wherein the processor (1110) is configured to implement steps of the method of any one of claims 1 to 6 when executing the executable instructions.

14. A computer-readable storage medium having stored therein computer-executable instructions which, when executed by a processor, implement steps of the method of any one of claims 1 to 6.
